# EUROPÄISCHE PATENTSCHRIFT

(11) **EP 2 295 659 B1**
(45) Veröffentlichungstag und Bekanntmachung des Hinweises auf die Patenterteilung: **10.07.2013**
(21) Anmeldenummer: 10008287.4
(22) Anmeldetag: 09.08.2010
(51) Int. Cl.: E04B 1/74, E04B 1/76, E04C 2/10, E04C 2/16

(54) **Körper aus einem Rohmaterial auf Basis von Rohrkolben und Verfahren zu seiner Herstellung**
Body composed of a raw material based on bulrush and method for producing same
Corps en matériau brut à base de typha et son procédé de fabrication

(30) Priorität: 12.08.2009 AT 12712009
(43) Veröffentlichungstag der Anmeldung: 16.03.2011
(73) Patentinhaber: NAPORO Klima Dämmstoff GmbH, 5280 Braunau am Inn (AT)
(72) Erfinder: Schwemmer, Robert, 84367 Reut (DE)

(56) Entgegenhaltungen:
- DE-A1- 19 757 418

## Beschreibung

Die Erfindung betrifft einen Körper aus einem Rohmaterial auf Basis von Rohrkolben sowie ein Verfahren zur Herstellung dieses Körpers.

Vor allem für die Herstellung von Platten aus pflanzlichen Rohstoffen werden die pflanzlichen Rohstoffe zerkleinert, die Schüttung mit einem Klebstoff benetzt und wieder zu einem kompakten Körper verpresst. Am weitesten verbreitet sind Platten auf Holzbasis wie Spanplatten, sogenannte MDF-Platten (mitteldichte Faserplatten), sogenannte OSB-Platten (oriented strand board). Beispielsweise werden aber auch Platten aus Kork, Stroh, Hanffasern und aus den Blättern von Rohrkolben (lateinischer Name "Typha") auf diese Weise gebildet.

Eine Materialeigenschaft derart gebildeter Platten ist ihr Quellverhalten wenn sie Wasser ausgesetzt sind. Vor allem für Platten aus Holzwerkstoffen gibt es eine Fülle von Veröffentlichungen dazu, wie die Dickenquellung durch Auswahl und/oder Bemessung und/oder Behandlung des Bindemittels klein gehalten werden kann. Als Beispiel dazu seien die DE 37 33 630 A1 und die US 3 892 586 A1 genannt. Das Erreichen eines guten (also niedrigen) Quellverhaltens ist damit mit der Anwendung von relativ teuren und baubiologisch oftmals eher unerwünschten Bindemitteln verbunden. In der US 3 892 586 A1 wird beispielsweise eine Wärmedämmplatte beschrieben, welche zu 40 Gewichtsprozent aus zerkleinertem Stroh mit einer Partikelgröße von 1 mm bis 5 mm besteht und zu 60 Gewichtsprozent aus Bindemitteln, vorwiegend Bitumen aber auch gelöschtem Kalk und Harz.

Damit Platten bezüglich Quellverhalten für die Verwendung als Teile von Bauwerken als gebrauchstauglich gelten können, dürfen sie unter Nässeeinfluss nicht mehr quellen als OSB-Platten. Bei einem üblichen, standardisierten Test (24 Stunden in Wasser liegend) liegt deren Dickenquellung bei maximal 20%. Bei Platten auf Basis von zerkleinertem, mit Klebstoff benetztem und verpresstem Rohrkolben konnte bisher mit wirtschaftlich und bauphysiologisch sinnvollen Mitteln keine derartig geringe Dickenquellung realisiert werden.

Unzerkleinerte Rohrkolben-Blattmasse ist mit ca. 60 kg/m³ sehr leicht. Dies beruht vor allem auf der Tatsache, dass die Pflanze zu ca. 85 Volumsprozent aus einem leichten Schwammgewebe besteht. Dieses Schwammgewebe kann bis zum fünffachen seines Gewichts an Wasser aufnehmen. Bei der Herstellung von Plattenwerkstoffen wird das Material zunächst zerkleinert. Die Dichte des zerkleinerten Materials beträgt - unter anderem auch in Abhängigkeit von der Zerkleinerungstechnologie zwischen 20 und 60 kg/m³. Dieses Material wird zur Bildung eines kompakten Körpers von typischerweise 50 - 300 kg/m³ verdichtet, wenn der Körper zur Wärmedämmung eingesetzt werden soll. Wenn das Produkt für andere Zwecke verwendet werden soll kann es auch auf 700 kg/m³ und mehr verdichtet werden. Kommt das fertige Produkt nun wieder mit Feuchtigkeit in Berührung, so wird wieder Feuchtigkeit aufgenommen und der Körper quillt auf.

In der DE 197 57 418 A1 wird eine Dämmplatte aus verpresstem Rohrkolbengranulat vorgeschlagen, wobei die einzelnen Granulatteile vor dem Verpressen überwiegend größer als 1 cm sind. Das Granulat wird mit 35 Gewichtsprozent Latexkleber vermischt und zu Platten verpresst. Die so hergestellten Platten haben zwar eine für Bauzwecke nutzbar hohe Wärmeisolierfähigkeit, sie sind aber trotz des hohen Klebstoffanteils auf Grund der hohen Quellung bei Nässeeinfluss oft nicht einsetzbar.

Die Granulatteile von Rohrkolbengranulat sind - wie die meisten Pflanzenhalme und Blätter bezüglich ihres Quellverhaltens anisotrop. Durch geordnetes Ausrichten von Teilchen zum Verpressen, kann das Quellverhalten in einer Vorzugsrichtung gezielt klein gehalten werden. Der Herstellungsvorgang wird damit aber aufwendig und teuer.

Von diesem Stand der Technik ausgehend hat sich der Erfinder die Aufgabe gestellt ein Herstellverfahren für Platten aus zerkleinerter und verpresster oberirdischer Blattmasse von Rohrkolben bereitzustellen, wobei die Dickenquellung der dementsprechend hergestellten Platten zufolge Wassereinfluss gering sein soll. Gegenüber bekannten Herstellungsverfahren für diesen Zweck soll man mit einem geringeren Anteil von Bindemittel das Auslangen finden.

Überraschender Weise lässt sich die Aufgabe erfindungsgemäß lösen, indem die oberirdische Blattmasse von Rohrkolben vor dem Verkleben einerseits ungewöhnlich fein zerkleinert wird, andererseits der Staubanteil aus der gewonnen Schüttung entfernt wird. Konkret liegen die Gewichtsanteile einzelner Größenklassen von Partikeln innerhalb folgender Grenzen:
- Weniger als 15 Gewichtsprozente der Partikeln weisen in mindestens zwei Dimensionen eine Abmessung auf, welche kleiner ist als 0,2 mm.
- Weniger als 40 Gewichtsprozente der Partikel weisen in mindestens zwei Dimensionen eine Abmessung auf, welche größer ist als 10 mm.
- Bei mehr als 30 Gewichtsprozenten der Partikel liegt die kleinste Abmessung in mindestens zwei Dimensionen im Bereich von 0,2 mm bis 5 mm.

Der erfindungsgemäßen Lösung liegt die überraschende Erkenntnis zu Grunde, dass bei Verwendung von Rohrkolben als Ausgangsmaterial für durch Verkleben von Granulat gebildete Körper, das Quellverhalten des so gebildeten Körpers deutlich stärker vom Zerkleinerungsgrad des Rohmaterials abhängig ist als bei Verwendung von beispielsweise Holz oder Stroh als Ausgangsmaterial.

Die oberirdische Blattmasse von Rohrkolben besteht im wesentlichem aus Schwammgewebe und Blattgewebe. Das Schwammgewebe ist im Wesentlichen isotrop. Das Blattgewebe, welches auch als "Stängelaußenhaut" bezeichnet wird, fasst bei unversehrtem Rohrkolbenblatt als dünne Schicht das Schwammgewebe ein und weist wie Holz eine eindeutige Faserrichtung auf. Das Blattgewebe ist daher bezüglich vieler Materialeigenschaften stark anisotrop.

In einer vorteilhaften Ausführungsform ist ein möglichst hoher Anteil von Partikeln des zu verpressenden Granulates länglich, enthält Blattgewebe und die Richtung der längeren Abmessung der Partikel fällt mit der Faserrichtung des in den Partikeln enthaltenen Blattgewebes zusammen.

### Beispiel:

Ein Blattbündel aus trockenen Rohrkolben wird quer zur Faserrichtung des Blattgewebes auf knapp 1 cm lange Stücke geschnitten und dann in einer Hammermühle weiter zerkleinert. Die Hammermühle weist einen in einer Trommel umlaufenden Anker auf, welcher am Umfang mit Vorsprüngen - die als Hämmer bezeichent werden - versehen ist. Die Mantelfläche der Trommel ist mit Längsschlitzen von 4 mal 80 mm Querschnittsfläche versehen, wobei die größere Abmessung in Umfangsrichtung liegt. Zum Zerkleinern der Rohrkolbenstücke werden diese in die Kammer eingegeben. In der Kammer werden sie durch die Hämmer zerschlagen und die entstehenden Partikel fallen aus den besagten Längsschlitzen heraus. Auf Grund des Brechverhaltens von Rohrkolbenstücken sind die meisten entstehenden Partikel länglich, wobei die Längsrichtung parallel zur Faserrichtung des in den Partikeln enthaltenen Blattgewebes ist. Durch dieses Brechverfahren wird erreicht, dass ein hoher Anteil des Schwammgewebes der gebildeten Schüttung in Partkeln vorkommt, in denen es so wie in seiner originalen Lage an der Stängelaußenhaut parallel anhaftet.

Das so gewonnene Granulat kann u. U. schon die oben genannten Bedingungen an die Partikelgrößenverteilung erfüllen. Es ist zu empfehlen den Staubanteil (Partikel mit einer Größe von weniger als 0,2 mm in mindestens zwei Dimensionen) zu entfernen, beispielsweise auszublasen oder auszusieben.

Je nach Art des Rohmaterials kann es erforderich sein, das Granulat zu trocken bis die verbleibende Schüttung eine Dichte von 20 - 30 kg/m³ aufweist.

Die Schüttung wird dann in einem arbeitenden Trommelmischer mit sieben bis zwölf Gewichtsprozent UF-Leim benetzt.

Um Platten zu bilden werden die Partikel der Schüttung in eine Form mit flachem, prismatischem Formnest gestreut, welche auf einem Rütteltisch angeordnet ist und während des Füllvorganges gerüttelt wird. Durch das Rütteln der Form wird die eingestreute Schüttung dichter und gleichmäßiger als bei stillstehender Form. Anschließend wird die Schüttung in der Form bei einer Temperatur von 150°C bis 180°C mittels einer Presse verdichtet, wobei die Pressrichtung und damit die Richtung der Verdichtung normal zur Ebene der zu bildenden Platte liegt. Um die erhöhte Temperatur aufzubringen sind die Pressstempel beheizt. Die Presskraft wird so hoch eingestellt, dass die erwünschte Dichte, beispielsweise 120 kg/m³ erreicht wird. Es sind Dichten von 100 bis zu 800 kg/m³ möglich. Bei höhere Dichten benötigt man eine geringere Menge Klebstoff pro Masse als bei geringeren Dichten.

Der Klebstoff härtet unter Druck und erhöhter Temperatur in der Presse aus. Am Beispiel einer Platte mit 4 cm Stärke, einer Dichte von 120 kg/m³ und einem Klebstoffanteil von sieben bis 12 Gewichtsprozent UF-Leim , werden mit vier Minuten Aushärtezeit in der Presse gute Ergebnisse erzielt.

Der so gebildete Körper weist eine Dickenquellung von sieben bis fünfzehn Prozent auf, wenn er vierundzwanzig Stunden in Wasser gelegt wird. Diese Quellung ist so gering, dass die Platte entsprechend den gängigen Baunormen als plattenförmiger Werkstoff verwendet werden darf.

Es wurden auch mit anderen Bindemitteln wie Isocyanat-Leim, MUF-Harz Leim, Resorcin-Leim und MUPF-Leim ähnlich gute Ergebnisse erzielt. Beste mechanische Eigenschaften werden mit MUF-, UF-, und PMDI-Leimen erzielt, wobei für die allermeisten Anwendungsfälle zurzeit UF-Leim aus Kostengründen der Vorzug zu geben ist.

Natürlich können auch andere Möglichkeiten der Zerkleinerung und des Mischens mit Bindemittel gewählt werden.

Beispielsweise kann auch mittels eines sogenannten Messerwellenzerspaners zerspant werden. Dabei rotieren ein innen liegender Anker und eine außen liegende, mit Messern versehene Trommel koaxial in entgegengesetzter Drehrichtung. Das zu zerspanende Granulat wird durch im Spalt zwischen den beiden rotierenden Körpern von Messern der außen liegenden Trommel abgetragen. Das Schnittgut fällt durch Spalten in der außen liegenden Trommel nach außen. Gute Ergebnisse werden mit einem Messerwellenzerspaner erzielt, bei welchem die Messer einen Millimeter mm vom Umfang der außen liegenden Trommelfläche nach innen vorstehen und wobei die Spaltbreite für den Durchlass des Schnittgutes 2,4 mm beträgt. Auch hier empfiehlt es sich, vom entstehenden Schnittgut den Staubanteil zu entfernen.

Für das Mischen des pflanzlichen Granulats mit Klebstoff können anstatt des schon erwähnten Trommelmischers natürlich auch andere Mischer, insbesondere Zwangsmischer aller möglichen Bauarten angewendet werden.

Für die Presstechnik können die verschiedenen diskontinuierlichen oder kontinuierlichen Verfahren, welche vor allem auch aus der Spanplattenfertigung bekannt sind, verwendet werden.

Wie auch bei Platten aus Holzfasern oder aus Kork kann bei entsprechender Behandlung des nach der Zerkleinerung gewonnenen Granulats mit Wasser und Hitze auf den Zusatz von separaten Bindemitteln verzichtet werden und die Verklebung der Partikel unter Druck allein mittels aus den Partikeln selbst an deren Oberfläche gelangender Bindemittel bewerkstelligt werden.

Die erfindungsgemäß aus Rohrkolben gebildeten Körper können gut zur Wärmeisolierung verwendet werden. Die Wärmeleitfähigkeit der einzelnen Partikel ist in Faserrichtung größer als normal dazu. Wenn man die Körper zur Wärmeisolierrichtung verwenden möchte ist es daher sinnvoll, dafür zu sorgen, dass die einzelnen Partikel so ausgerichtet sind, dass ihre Faserrichtung möglichst quer zu jener Richtung liegt in welcher Wärmefluss unterbunden werden soll. Am Beispiel von Wärmedämmplatten sollte die Faserrichtung der einzelnen Partikel also möglichst in der Plattenebene liegen. Eine erste Maßnahme mit der dies erreicht werden kann ist die, möglichst viele Partikel in ihrer Faserrichtung deutlich länger auszuführen als in den beiden normal dazu liegenden Richtungen und die Partikel schon in der Form in welcher sie zu einem Körper verpresst werden, so anzuordnen, dass ihre Längsrichtung möglichst quer zu jener Richtung liegt, in welcher später gute Wärmedämmwirkung erzielt werden soll. Dieses Anordnen kann beispielsweise dadurch erfolgen, dass die Form in welcher das Verpressen stattfinden soll, schichtweise von oben her befüllt wird, sodass die jeweils zuoberst liegenden Partikel von selbst in die liegende Position fallen. Die Richtung in der dann gute Wärmedämmwirkung erzielt wird, ist dabei die Vertikale. Die Partikel können in einfacher Weise so ausgeführt werden, dass sie überwiegend in ihrer Faserrichtung länger sind als in den beiden anderen Dimensionen, indem die Rohrkobenblätter zuerst quer zur Faserrichtung in definierter Länge abgeschnitten werden und dann in einer Mühle, beispielsweise Hammermühle ungeordnet zerkleinert werden. Die Partikel brechen bevorzugt entlang der Fasern.

Eine zweite Maßnahme besteht darin, den Vorgang des Verdichtens der Schüttung zu einem festen Körper so durchzuführen, dass jene Richtung in welcher vorwiegende Verringerung der Abmessung der Schüttung erfolgt, mit jener Richtung am fertigen Körper zusammenfällt, in welcher dieser später die beste Wärmeisolierwirkung aufweisen soll. Am Beispiel wärmeisolierende Platten heißt das, dass die Verdichtung normal zur Plattenebene erfolgen soll. Bei Profilen oder Formkörpern kann auch von zwei Richtungen her verdichtet werden, sodass damit zwei Vorzugsrichtungen der Wärmeisolierung eingerichtet werden.

Idealerweise sollten beide genannten Maßnahmen miteinander kombiniert werden.

Das erfindungsgemäße Verfahren ist vor allem für die Herstellung von Platten, welche am Bau für Wärmeisolierzwecke verwendet werden, vorteilhaft anwendbar. Andere Anwendungsmöglichkeiten sind beispielsweise: Herstellung von Formkörpern, tragende und nicht tragende Leichtbauelemente, Kernschicht für thermisch getrennte Bauteile (Kerndämmung) wie Fertigteile, Ziegelstürze, Fenster oder Türen, Pinnwände (im Möbelbau oder der Objektausstattung), Leichtbauplatten im Möbelbau, Deckenrand-Dämmung und dergleichen.

## Patentansprüche

1. Körper, aus mit Bindemittel versehenem, verpresstem Granulat der überirdischen Blattmasse von Rohrkolben, **dadurch gekennzeichnet, dass** im unverdichteten Partikelgranulat die Gewichtsanteile einzelner Größenklassen von Partikeln innerhalb folgender Grenzen liegen:
a) Weniger als 15 Gewichtsprozente der Partikeln weisen in mindestens zwei Dimensionen eine Abmessung auf, welche kleiner ist als 0,2 mm.
b) Weniger als 40 Gewichtsprozente der Partikel weisen in mindestens zwei Dimensionen eine Abmessung auf, welche größer ist als 10 mm.
c) Bei mehr als 30 Gewichtsprozenten der Partikel liegt die kleinste Abmessung in mindestens zwei Dimensionen im Bereich von 0,2 mm bis 5 mm.

2. Körper nach Anspruch 1, **dadurch gekennzeichnet, dass** im unverdichteten Partikelgranulat der Gewichtsanteil von Partikeln, welche in mindestens zwei Dimensionen eine Abmessung aufweisen, welche kleiner ist als 0,2 mm, geringer ist als 10 Prozent.

3. Körper nach Anspruch 1 oder Anspruch 2, **dadurch gekennzeichnet, dass** mehr als 70 Gewichtsprozent der Partikel des unverdichteten Partikelgranulates derart von länglicher Gestalt sind, dass die größere Abmessung mindestens um 50 Prozent länger ist als die nächst kleinere, dazu quer liegende Abmessung und dass die größere Abmessung im Wesentlichen parallel zur Faserrichtung des in den Partikeln enthaltenen Blattgewebes verläuft.

4. Körper nach einem der bisherigen Ansprüche, **dadurch gekennzeichnet, dass** der Gewichtsanteil an Bindemittel maximal 15 Prozent beträgt.

5. Körper nach einem der bisherigen Ansprüche, **dadurch gekennzeichnet, dass** er eine als Wärmedämmung verwendbare Platte ist.

6. Verfahren zur Herstellung eines Körpers aus Rohrkolbenblättern, wobei die Rohrkolbenblätter zerkleinert werden, die Oberfläche der Partikel des entstandenen Granulates mit einem Bindemittel versehen wird und das aus diesen Partikeln gebildete Granulat in einer Presse verdichtet wird bis dass das Bindemittel ausgehärtet ist, **dadurch gekennzeichnet, dass** die Rohrkolbenblätter erst quer zu ihrer Längsrichtung in Stücke von weniger als 2 cm Länge geschnitten werden und dann in einer Mühle oder in einem Zerspaner weiter zerkleinert werden und dass das dabei entstehende Granulat ggf. durch Sieben oder Ausblasen von Staubanteil befreit wird, sodass im unverdichteten Partikelgranulat die Gewichtsanteile einzelner Größenklassen von Partikeln innerhalb folgender Grenzen liegen:
a) Weniger als 15 Gewichtsprozente der Partikeln weisen in mindestens zwei Dimensionen eine Abmessung auf, welche kleiner ist als 0,2 mm.
b) Weniger als 40 Gewichtsprozente der Partikel weisen in mindestens zwei Dimensionen eine Abmessung auf, welche größer ist als 10 mm.
c) Bei mehr als 30 Gewichtsprozenten der Partikel liegt die kleinste Abmessung in mindestens zwei Dimensionen im Bereich von 0,2 mm bis 5 mm.

7. Verfahren nach Anspruch 6, **dadurch gekennzeichnet, dass** das Zerkleinern der geschnittenen Rohrkolbenblätter in einer Hammermühle erfolgt, deren die Trommel umfassende Mantelfläche Längsschlitze mit 3 bis 5 mm Breite und mit mehreren cm Länge aufweist, wobei die Längsrichtung der Schlitze in Umfangsrichtung der Hammermühle liegt.

8. Verfahren nach Anspruch 6 oder Anspruch 7, **dadurch gekennzeichnet, dass** damit als Wärmedämmung verwendbare Platten gefertigt werden, wobei beim Verdichtungsvorgang die Pressrichtung normal zur Ebene der zu bildenden Platte liegt und wobei das Anordnen der Partikel als durch Pressen zu verdichtende Schüttung schichtweise erfolgt, wobei die Schichtebenen parallel zur Ebene der zu bildenden Platte liegen.

## Claims

1. Body made of compressed granulate consisting of above-ground leafy matter of bulrush mixed with binder material, **characterised in that** the weight proportion of individual particle size classes in the uncompacted particle granulate lies within the following ranges:
a) Less than 15 per cent weight of the particles exhibiting a measurement smaller than 0.2 mm in at least two dimensions.
b) Less than 30 per cent weight of the particles exhibiting a measurement greater than 10 mm in at least two dimensions.
c) More than 30 per cent weight of the particles exhibiting minimum measurements within the range of 0.2 mm to 5 mm in at least two dimensions.

2. Body according to Claim 1, **characterised in that** the weight proportion of particles exhibiting a size smaller than 0.2 mm in at least two dimensions in the uncompacted particle granulate is lower than 10 per cent.

3. Body according to Claim 1 or Claim 2, **characterised in that** more than 70 per cent weight of the uncompacted granulate particles exhibiting an elongated shape with the larger measurement at least 50 per cent greater than the next, smaller measurement perpendicular thereto and the larger measurement primarily running in parallel with the direction of the leaf tissue fibres contained in the particles.

4. Body according to one of the previous claims, **characterised in that** the weight proportion of binder material does not exceed 15 per cent.

5. Body according to one of the previous claims, **characterised in that** it is a panel which can be used for thermal insulation.

6. Method for producing a body made of bulrush leaves comprising the steps of shredding the bulrush leaves, coating the particle surface of the resulting granulate with binder material and compacting the granulate made from these particles in a press until the binder material is hardened, **characterised in that** the bulrush leaves are first shredded perpendicularly to their longitudinal direction into pieces less than 2 cm long and then further shredded in a grinder or flaker and, if required, any dust content is removed from the resulting granulate by screening or blowing it out so that the weight proportion of individual particle weight classes in the uncompacted particle granulate lies within the following ranges:
a) Less than 15 per cent weight of the particles exhibiting a measurement smaller than 0.2 mm in at least two dimensions.
b) Less than 40 per cent weight of the particles exhibiting a measurement greater than 10 mm in at least two dimensions.
c) More than 30 per cent weight of the particles exhibiting minimum measurements within the range of 0.2 mm to 5 mm in at least two dimensions.

7. Method according to Claim 6, **characterised in that** cut bulrush leaves are shredded in a hammer mill with the drum surface area exhibiting longitudinal slots 3 to 5 mm wide and several centimetres long and with the longitudinal direction of the slots aligned with the circumferential direction of the hammer mill.

8. Method according to Claim 6 or Claim 7, **characterised in that** it is used to fabricate panels usable for thermal insulation with the direction of compression being perpendicular to the plane of the panel to be formed during the compacting process and the particles added in layers to be compacted, and with the layer planes being aligned in parallel with the plane of the panel to be formed.

## Revendications

1. Corps, en granulat de matière feuillue aérienne de typha additionné de liant et comprimé, **caractérisé en ce que** dans le granulat de particules non compacté les pourcentages de poids des classes de grosseurs individuelles des particules se situent dans les limites suivantes :
a) moins de 15 pour cent du poids des particules sont de dimension inférieure à 0,2 mm dans au moins deux dimensions.
b) moins de 30 pour cent du poids des particules sont de dimension supérieure à 10 mm dans au moins deux dimensions.
c) Dans plus de 30 pour cent du poids des particules, la dimension la plus petite se situe dans la plage de 0,2 mm à 5 mm dans au moins deux dimensions.

2. Corps selon la revendication 1, **caractérisé en ce que** dans le granulat de particules non compacté le pourcentage de poids des particules dont la dimension est inférieure à 0,2 mm dans au moins deux dimensions, est inférieur à 10 pour cent.

3. Corps selon la revendication 1 ou la revendication 2, **caractérisé en ce que** plus de 70 pour cent du poids des particules du granulat de particules non compacté sont de forme oblongue, que la dimension la plus grande est plus longue d'au moins 50 pour cent que la dimension inférieure la plus proche en travers par rapport à celle-ci, et que la dimension la plus grande est essentiellement parallèle au sens des fibres du tissu foliaire contenu dans les particules.

4. Corps selon l'une des revendications précitées, **caractérisé en ce que** le pourcentage de poids du liant est de 15 pour cent au maximum.

5. Corps selon l'une des revendications précitées, **caractérisé en ce qu'**il est une plaque utilisable comme isolation thermique.

6. Procédé de fabrication d'un corps en feuilles de typha, suivant lequel les feuilles de typha sont concassées, la surface des particules du granulat ainsi obtenu est revêtue d'un liant et le granulat formé à partir de ces particules étant comprimé dans une presse jusqu'à ce que le liant soit durci, **caractérisé en ce que** les feuilles de typha sont coupées dans un premier temps en travers de leur sens longitudinal en morceaux de moins de 2 cm de long et concassées ensuite dans un moulin ou dans une coupeuse à copeaux, et que le granulat ainsi obtenu est libéré ensuite de la part de poussières par tamisage ou soufflage, de sorte que dans le granulat des particules non compacté les pourcentages de poids des classes de grosseur individuelles des particules se situent dans les limites suivantes :
a) moins de 15 pour cent du poids des particules sont de dimension inférieure à 0,2 mm dans au moins deux dimensions.
b) moins de 40 pour cent du poids des particules sont de dimension supérieure à 10 mm dans au moins deux dimensions.
c) Dans plus de 30 pour cent du poids des particules, la dimension la plus petite se situe dans la plage de 0,2 mm à 5 mm dans au moins deux dimensions.

7. Procédé selon la revendication 6, **caractérisé en ce que** le concassage des feuilles de typha coupées s'effectue dans un broyeur à marteaux dont la surface latérale enveloppant le tambour comporte des fentes longitudinales de 3 à 5 mm de large et de plusieurs centimètres de long, le sens longitudinal des fentes étant orienté dans le sens circonférentiel du broyeur.

8. Procédé selon la revendication 6 ou la revendication 7, **caractérisé en ce qu'**il sert à fabriquer des plaques utilisables comme isolation thermique, le sens de pression au cours du travail de compactage étant normal par rapport au plan des plaques à former et la disposition des particules se faisant par déversement en couches à compacter, le plan des couches étant dans un plan parallèle à celui des plaques à former.
